# EUROPEAN PATENT SPECIFICATION

(11) **EP 0 309 017 B1**
(45) Date of publication and mention of the grant of the patent: **02.06.1993**
(21) Application number: 88201806.2
(22) Date of filing: 04.12.1985
(51) Int. Cl.: B65B 9/15, B65B 25/06, A22C 7/00

(54) **A mould suitable for packing and processing a meat product in foil**
Form mit angepasster Auskleidung zum Verpacken und Behandeln eines Fleischprodukts
Moule avec revêtement adapté pour emballer et traiter un produit charcutier en sac plastique

(30) Priority: 07.12.1984 NL 8403736; 27.02.1985 NL 8500550
(43) Date of publication of application: 29.03.1989
(62) Divisional of application: 85202021.3
(73) Proprietor: STORK LANGEN B.V., 5431 SH Cuijk (NL)
(72) Inventor: Langen, Johannes Christina, NL-5431 GC Cuyk (NL); Langen, Christianus Petrus, NL-5431 BB Cuyk (NL)
(74) Representative: Hoorweg, Petrus Nicolaas

(56) References cited:
- FR-A- 1 267 073
- FR-A- 2 493 104
- FR-A- 2 493 804
- FR-A- 2 508 279
- US-A- 2 084 806

## Description

The invention concerns a mould suitable for use in an apparatus for packing a meat product, such as ham, in foil being made of a bag-shaped air tight sealed foil, said mould having a closed bottom, a side wall-section connected to the circumference of said bottom and formed such that said mould has over its length a constant cross-section and an open side, opposite that bottom, and also a cover-section whose outer circumference edge fits closely against the inner surface of the wall section.

Owing to the constant cross-section, the cover-section can slide along the inner surface, whereby the pressurisation of the lining can easily take place by the exertion of pressure on the cover-section. Since the meat tends to expand during the heating phase, any clearance between the cover-section and the mould-section has to be prevented, in order to give the final meat product its required shape, without protrusions. Such a mould is for instance known from FR-A-2493804 or FR-A-2508279.

To improve the close fit of the cover-section, this section is according to the invention divided into two or more mutually displaceable members, so that any clearance can be taken up by movement of the cover members.

In a preferred embodiment, the cover members are mutually connected by curved spring strips which stand perpendicular on the cover members. When the cover is inserted in the mould, the cover members can be pressed close to one another against the spring pressure, so that after insertion the springs ensure a constant pressure of the cover members against the inside of the mould.

A preferred embodiment of the mould the cross-section is rectangular in shape, the flat side walls being provided with one or more reinforcement ridges. This results in a block-shaped meat product, the ridges increasing the stability of shape of the mould-section.

To the same end of stability of shape, the edge strip of the mould-section can also, or instead, be reinforced by a thickening of the wall of the mould.

The invention will be further explained in the description of the drawings, below.

### In the drawings:

Figure 1 shows a perspective bottom view of a mould and also a perspective top view of the cover-section which can be applied therein;
Figures 2a and 2b each show a perspective top view of one of two alternative embodiments of cover-sections;
Figures 3a to 3f inclusive show various phases of a packing method wherein the mould according to the invention is used;
Figure 4 shows a perspective side view of a holder for moulds from figure 1;
Figure 5 shows a side view of part of the holder from figure 4.

The pressing punch 56 is equipped on the side facing the front with a folding-member 58, which is joined with a hinged connection to the punch at 59. The folding-member consists of a bent plate whose breadth corresponds to that of collar M when folded flat. The folding member can be turned in the direction of arrow P1 to a position under the pressure punch 56, and back again.

The above described apparatus works as follows:

After mould 4 has been positioned and the collar M has been folded out flat, the folding member can fold the collar over through an angle of 90° onto the supporting table 55, and smooth it out. Through this folding process, the collar M can no longer pucker, which helps during air-tight sealing.

Then the operator can close the vacuum chest by applying the cover 53 in front of the appropriate section. Consequent to the evacuation of the section, tube 57 will, because of the pressure of the medium, automatically push pressing punch 56 in the direction of pressing table 55, and thus weld the two layers of the collar together. After the sealing operation, the air pressure in the section can be allowed to return, the mould can be taken out, and the contents of the evacuated foil can be processed further, for example by pasteurization or cooking.

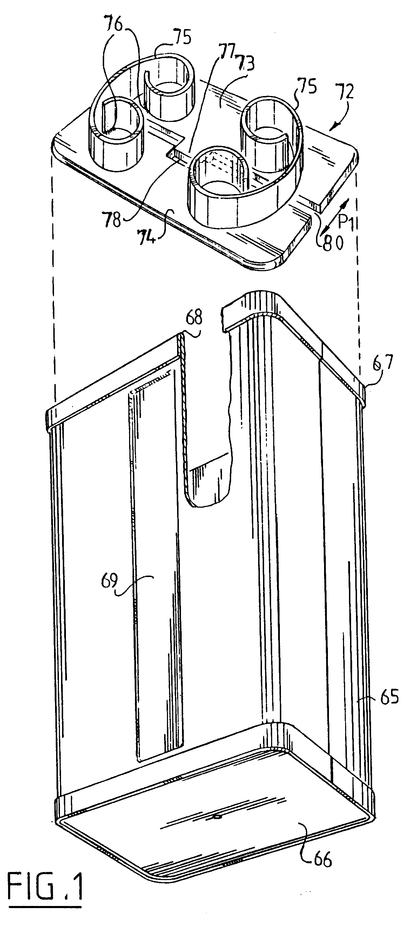

Figure 1 shows the mould according to the invention, which consists of a prismatic portion 65, with a fixed bottom 66. It should hereby be noted that the cross-section of the mould 65 has a principally rectangular shape. The lower and upper edges of prismatic portion 65 are reinforced by thickenings 67, in the walls, which can be made by, before bending a cylinder from sheet material, first folding the edges over through 180° (see item 68 in figure 1). The wide side-wall section of the mould 65 is strenghtened by a recessed portion forming a reinforcement rib 69. Hereby, potential bulging outwards of the side-wall of the mould 65 during pressurization of the contents is avoided.

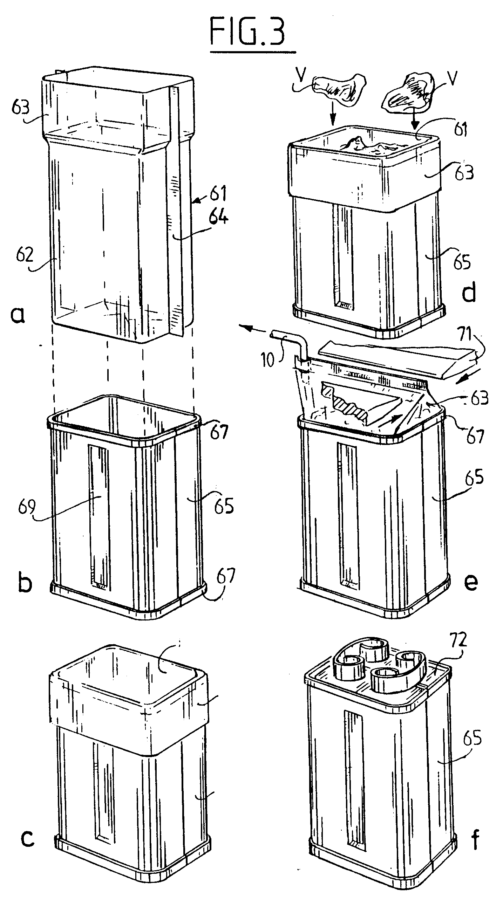

Cover-section 72 consists, in the form shown according to figure 1, of two members 73 and 74, which are mutually connected by means of spring strips 75, standing perpendicularly thereon, for example by securing the ends of the curved spring strips by welding at 76. One of the members 73, is provided with a lip 77, which fits into a recess 78 of the other cover-member 74. In this construction, a sideways relative movement of members 73 and 74 in the direction of arrow P1 is permissible. In the position during assembly by welding, there is a narrow gap 80 between the members, such that on insertion in mould 65, the members 73 and 74 must be pressed towards one another against the pressure of spring leaves 75. As soon as cover-section 72 has been inserted in prismatic mould-section 65, after releasing of the lid, spring strips 75 press cover-members 73 and 74 firmly against the inside of the side-walls of mould part 65, so that all clearance between cover-section 72 and the inside of form part 65 is prevented. The strenghtened outer edge 67, as well as the reinforcement rib 69, help ensure a correct contact. It should be noted that possible a smaller clearance 20 remains between members 73 and 74, but this is covered by the folded-up weld seam of a lining 61 (see figure 3), so that on a possible pressing action on cover-section 72 and the contents of the mould 65, a uniform pressure on the contents is ensured.

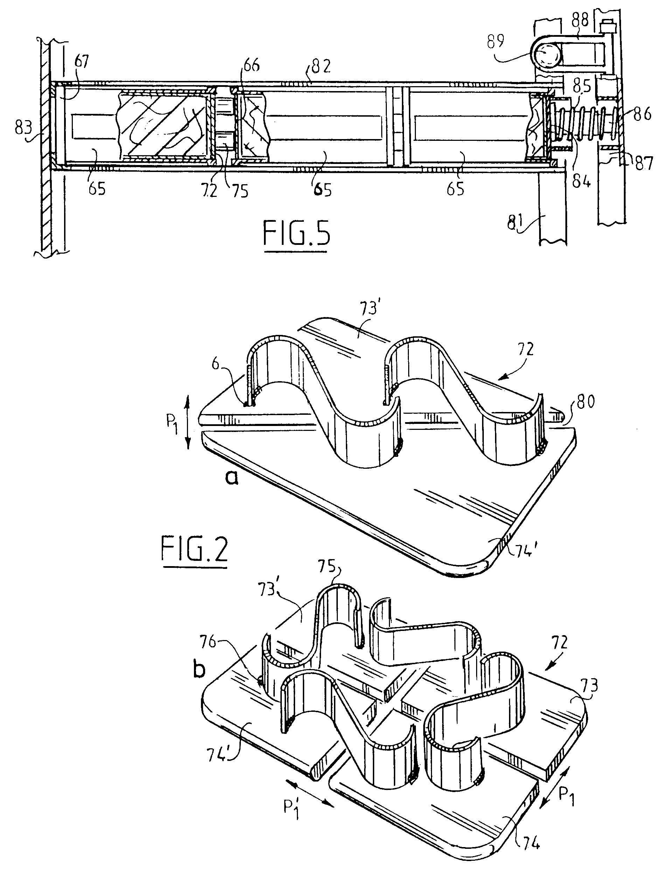

Figures 2a and 2b show alternative embodiments of lid part 72. The gap 80 between elements 73' and 74' is dependent for its direction on the manner of folding the lining 61 in mould 65. Should the welding seam run diagonally then a form of lid corresponding to figure 2a is advantageous. If the extended part 63 of the lining is folded cross-ways, then the embodiment of the lid shown in figure 2b is preferable.

The cover-members 73, 74 in the various embodiments are in each case mutually connected by curved leaf springs 75, which are welded securely by their end parts at 76 to the cover-members. In this way a freedom of movement of members 73, 73', 74 and 74' in the directions of arrows P1 or P1' is made possible.

In figure 3 number 61 indicates a bag-shaped lining, suitable for use in a mould according to figure 1, and consisting of a lower portion 62 and an extended upper portion 63 whereof the inner circumference is greater than that of the lower portion 62, the reason for which will be explained below. This widening of the inner circumference can easily be brought about, starting with a foil material, such as transparent plastic, which is folded shut at the bottom in the usual way, and which is sealed along the side by means of a longitudinal seam, the inner circumference of the bag automatically becomes correspondingly wider.

Figure 3c shows the mould in which lining 61 is fitted, with the extended portion 63 being folded down over the upper edge 67, of the mould. This is possible owing to the larger inner dimensions of the extended portion 63.

Figure 3d shows the situation in which the mould with the lining 61 fitted therein is filled with pieces of meat, V. After sufficient pieces of meat have been put into the mould, edge 63 is folded back again, and then firstly the lining is evacuated at the top by means of a vacuum apparatus 70 and, subsequently, it is sealed airtight by a welding apparatus 71. The projecting sealed part 63 of the lining is folded down in the usual way, for example in the same way as the bottom, after which cover-section 72 is placed in the open end of the mould, according to figure 3f.

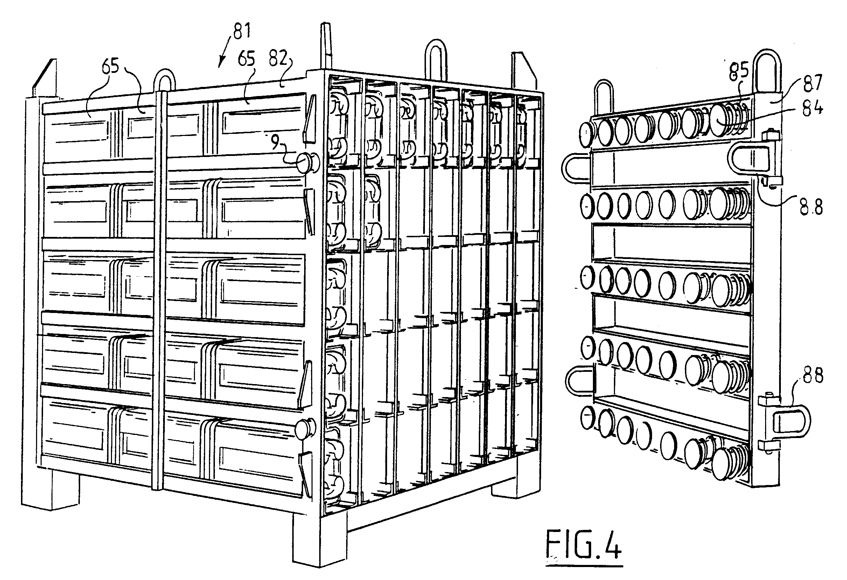

Figures 4 and 5 show, in perspective, a holder 81, wherein the filled moulds in a row can be processed simultaneously, said holder consists of a framework of longitudinal and transverse profiles, which ensure that guides 82 are made available for a number of adjacently arranged moulds 65. The adjactently situated moulds 65 are so positioned that lid section 72 lies with the spring strips 75 which are mounted thereon against the bottom 66 of the adjacent mould. The filling of the form with meat pieces is such that the spring leaves project beyond the edge 67 of mould 65.

Either the guide 82 or the holder 81 is provided at one end with a fixed end partition 83, against which rests the bottom edge 67 of the first mould. At the opposite end, there is an elastically compliant end partition 84 fitted, which here has the form of a ram. The ram lies against the lid section 72 of the mould on the right in figure 5, and is elastically supported by a helical spring 85, which travels along a pin 86 of a clamping frame 87. The clamping frame 87 is made with straps 88 which fit around knobs 89 of the frame of the holder 81. The size of the straps 88 and the placing of knobs 89 is such that when clamping frame 87 is fitted on the front of holder 81, the compliant partitions 84 come into spring-loaded contact with the lid sections 72 of the front moulds of each row in a guide 82. By this means, the whole row of moulds is subject to a definite spring pressure, and after closing the entire holder 81 with moulds 65 can be placed in a heating space, for example a steam vessel. Through the supply of heat, the meat expands and becomes pasteurized, whilst the lining 61 shrinks as a result of the heat. Owing to the permanent pressure on the contents of the moulds 65 as the result of springs 85, the contents take on the exact shape of the prismatic mould section 65, and the lining 61 fits closely around the moulded meat product.

The end product is obtained by removing moulds 65 from the holder removing cover section 72, and taking out the lining with the shaped meat product in it from the mould.

The invention is not restricted to the above described embodiments.

## Claims

1. A mould suitable for use in an apparatus for packing a meat product, such as ham, in foil being made of a bag-shaped air tight sealed foil (61), said mould having a closed bottom (66), a side wall-section connected to the circumference of said bottom and formed such that said mould has over its length a constant cross-section and an open side, opposite that bottom, and also a cover-section whose outer circumference edge fits closely against the inner surface of the wall section, characterized in that the cover section is divided into two or more mutually moveable members (73, 74).

2. Mould according to claim 1, characterized in that the cover members are mutually connected by curved spring strips (75) with its width dimension perpendicular thereon.

3. Mould according to one of the claims 1-2, characterized in that the cross-section of the mould (65) has a rectangular shape, and in that the flat side-walls are provided with one or more reinforcement ridges (69).

4. Mould according to one of the claims 1-3, characterized in that at least the edge strip (67) at the open end of the mould section is reinforced by a thickening of the wall.

## Patentansprüche

1. Form, die für einen Gebrauch in einer Vorrichtung zum Verpacken eines Fleischproduktes, wie beispielsweise Schinken, in Folie geeignet ist, welche aus einer beutelförmigen, luftdicht versiegelten Folie (61) hergestellt ist, wobei die Form einen geschlossenen Boden (66) sowie einen Seitenwand-Abschnitt aufweist, der mit dem Umfang des Bodens verbunden und derart ausgebildet ist, daß die Form über ihre Länge einen konstanten Querschnitt und eine dem Boden gegenüberliegende offene Seite aufweist, und wobei die Form ferner einen Abdeck-Abschnitt aufweist, dessen äußere Umfangskante eng gegen die innere Oberfläche des Wand-Abschnittes anliegt, dadurch gekennzeichnet, daß der Abdeck-Abschnitt in zwei oder mehr gegeneinander bewegliche Teile (73, 74) unterteilt ist.

2. Form nach Anspruch 1, dadurch gekennzeichnet, daß die Abdeckteile miteinander durch gebogene Federstreifen (75) verbunden sind, deren breite Seiten senkrecht auf den Abdeckteilen stehen.

3. Form nach einem der Ansprüche 1 - 2, dadurch gekennzeichnet, daß der Querschnitt der Form (65) rechteckig geformt ist und daß die flachen Seitenwände mit einer oder mehreren Verstärkungsfurchen (69) versehen sind.

4. Form nach einem der Ansprüche 1 - 3, dadurch gekennzeichnet, daß zumindest der Kantenstreifen (67) am offenen Ende des Form-Abschnittes durch eine Verdikkung der Wand verstärkt ist.

## Revendications

1. Moule prévu pour être utilisé dans un appareil pour emballer un produit alimentaire de type viande, tel que du jambon, dans une feuille en forme de sac (61), fermée de manière étanche à l'air, ledit moule présentant un fond fermé (66), une partie formant paroi latérale raccordée à la circonférence dudit fond et formée de telle manière que ledit moule présente une section constante sur toute sa longueur, et un côté ouvert, à l'opposé du fond, et également, une partie formant couvercle dont le bord de circonférence extérieur s'emboîte étroitement contre la surface intérieure de la partie formant paroi, caractérisé en ce que la partie formant couvercle est divisée en deux ou plusieurs organes tous mobiles.

2. Moule selon la revendication 1, caractérisé en ce que les organes formant couvercles sont tous raccordés par des bandes incurvées formant ressorts (75) placées sur les couvercles de manière à ce que leur largeur soit perpendiculaire à ces derniers.

3. Moule selon l'une quelconque des revendications 1 à 2, caractérisé en ce que la section du moule (65) présente une forme rectangulaire et en ce que les parois latérales plates sont pourvues d'une ou de plusieurs nervures de renforcement (69).

4. Moule selon l'une quelconque des revendications 1 à 3, caractérisé en ce qu'au moins la bande du bord (67) au niveau de l'extrémité ouverte de la partie formant moule est renforcée par un épaississement de la paroi.
